# EUROPEAN PATENT SPECIFICATION

(11) **EP 0 681 898 B1**
(45) Date of publication and mention of the grant of the patent: **24.11.1999**
(21) Application number: 94500084.2
(22) Date of filing: 11.05.1994
(51) Int. Cl.: B29C 45/14, B29C 65/70

(54) **A process for producing plastic parts with a hollow structure**
Ein Verfahren zur Herstellung von hohlen Gegenständen aus Kunststoff
Procédé pour la fabrication de produits creux en plastique

(43) Date of publication of application: 15.11.1995
(73) Proprietor: TECHCOMA AG, CH-6300 Zug (CH)
(72) Inventor: Maljean, Olivier, F-84270 Vedene (FR)
(74) Representative: Carpintero Lopez, Francisco

(56) References cited:
- EP-A- 0 064 310
- DE-A- 4 141 393
- US-A- 4 261 947

## Description

### OBJECT OF THE INVENTION

The present invention refers to a process for the manufacture of pieces of plastic with a hollow structure and with various characteristics which have to comply with particular demands in its functioning and, in particular, hollow multicurved pieces, with either one or several exit tubes.

The process subject of the invention involves the production of thin walled boxes injected in traditional conditions and, which are subsequently covered using the principles of low pressure injection.

### BACKGROUND OF THE INVENTION

At present, the manufacture of hollow pieces in plastic material is generally carried out using blowing and injection procedures. Blowing techniques present restrictions on pieces which require geometric demands of great accuracy, therefore the method which is normally used for the manufacture of these types of pieces is plastic injection with a fused nucleous.

The injection procedure with a fuse nucleous mainly requires the carrying out of two different operations, an initial plastic injection operation and a subsequent removal of the core produced in fuse material. This second operation is generally complex and costly. It is for this reason that various methods for the removal of the fusible core exist nowadays, but all of them present an excessive complexity which makes them inappropriate for mass production on a large scale.

A process directed to the manufacture of tubes with two or more consecutive curvatures is described in the German Patent number 41 41 393, and involves producing in an initial phase different tubular pieces which, once assembled using grooves and tongues, form a tube which is developped in many directions constructing the unfused core of a mold for a subsequent injection. This tube is then put in an injection mold and is placed in such a way that a cavity is formed between the mold and the tubular pieces which are conformers of the core. Finally, the mold is closed and injected with a molten mass of synthetic material in the formed cavity using regular procedures. A totally impermeable compound tube capable of withstanding high pressures is obtained from this shape.

This process gives rise to the inconvenience of the need to produce the tubes which constitute the core with a notable thickness which allows them to withstand the high pressures involved in the subsequent injection. Also, in the production of the core or the interior part which fits different molded pieces together in a tubular shape, it is very difficult to obtain a good interior finished of these pieces since the molding of the tubes does not guarantee good quality of the interior surface.

The process of this invention removes the described inconveniences, replacing the fusible core with two semi-boxes pre-assembled using a socket or a mortise and tenon joint, as opposed to soldering, which will form the internal part of the tube, thus avoiding the problems arising from the removal of the injection core and achieving a high quality finish of the tubes in a simple fashion without the need for subsequent machining or polishing.

### DESCRIPTION OF THE INVENTION

The process subject of the invention principally involves the production of thin-walled semi-boxes injected in traditional conditions which are pre-assembled by Tonguing and grooving in order to build the inside of the tube and which are subsequently covered with a lining generally of a different plastic material which is injected at a low pressure on the pre-assembled semi-boxes.

The use of pre-assembled semi-boxes as a core for the subsequent injection of the covering material, involve a number of important advantages which will be described below and which make it possible to carry out low pressure injection since, in this method, the semi-boxes do not get crushed or loose their shape, which is what would happen if the injection of the covering material was carried out at the high pressures normally used in the injection of plastics.

This way, it is possible to produce the tubes (manifolds) using different materials in its interior and exterior, thus allowing fine materiales to be added to its interior which guarantee a performance capable of withstanding heat and other physical or chemical agressions, while the exterior covering can be carried out using cheaper materials which reduces the end cost of the product without losing any of the functional characteristics required.

Another important advantage arising from the use of semi-boxes in the forming of the interior of the duct, comes from the fact that the demoulding conditions of the semi-boxes are better than those of the closed tubes, which allows pieces with a better surface finished to be obtained and, consequently, better results.

On the other hand, the proposed process for the carrying out of the external covering through low pressure injection techniques ( around 50 kg/cm²), allows the thickness of the semi-boxes used to be reduced considerably ( approximately 2.5 mm.), thus decreasing the final weight of the piece and achieving an important saving on the fine material used in the manufacture of the aforementioned semi-boxes as well.

The exterior covering of the semi-boxes constitutes the complete exterior volume of the tube and when contracting presses against the semi-boxes therefore guaranteeing the mechanical resistance and impermeability of the group, also being able to mold itself to special external shapes directed to the fulfillment of subfuntions, like, for example, in the case of the motor manifolds, to secure or allow the way for other elements of the car motor.

With the aim of improving the fixing of the covering on the interior duct, during the moulding process on the exterior of each one of the semi-boxes several lugs are produced whose depth coincide with the desired thickness for the second mold and which thus reinforce the mechanical union between both materials. These lugs are also useful for centering and positioning the semi-boxes in the mold of a tool mounted on the low pressure injection machine, stopping the semi-boxes from moving on the inside of the mold during the injection process and guaranteeing the formation of a covering of uniform thickness.

These lugs described, can even, gauging their thicknesses, create several fusible elements which allow a union through fusion when the covering material, hotter because of the injection, comes in contact with the lugs.

In accordance with the process of the present invention, hollow multi-curved pieces are obtained, with high mechanical characteristics, good performance before the increase in temperature, good sealing, good finished in the interior walls of the duct, a reduction in weight, and with a cost which is more economical than the cost necessary for their production using any other of the current techniques.

### DESCRIPTION OF THE DRAWINGS

In order to complement the description being carried out and with the aim of helping to understand better the characteristics of the invention, the present specification comes with a set of drawings, which is an integral part of the specification and which is illustrative but not limitating, that represents:

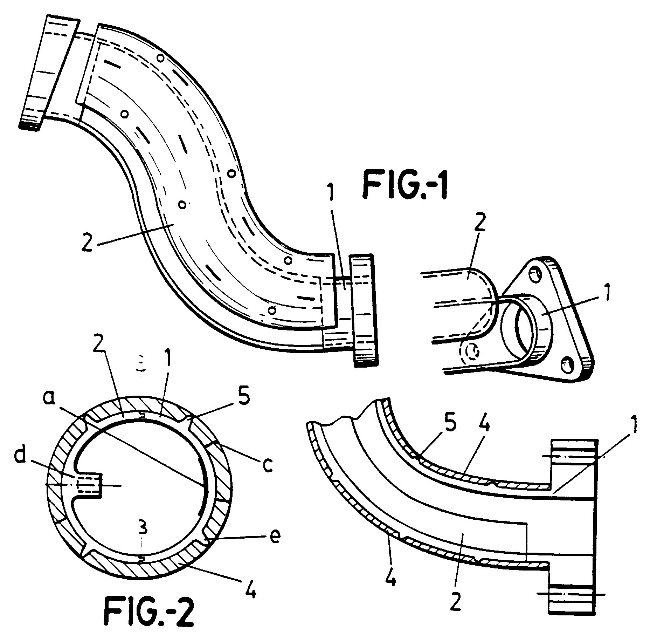

Figure 1.-Shows a diagram of a tubular piece made up of two semi-boxes from the side, a perspective detail of it, and a section of it once the exterior covering has been added.
Figure 2.-Shows a section of ring-shaped piece consisting of the two semi-boxes and the exterior covering.

### PREFERRED EMBODIMENT OF THE INVENTION

On looking at the figures, it can be seen how the process subject of the invention is principally characterised by the execution of two semi-boxes (1) and (2) injected into thermoplastic or thermostable using traditional techniques, but at a reduced thickness ( around 2.5 mm. ). These semi-boxes include fixing means (3) which allow the pre-assembly by tonguing and grooving of the semi-box (1) with the semi-box (2), in order to build in this way a tubular body with a good surface finished on its internal walls.

In order to end the process, and using the tubular body formed by the semi-boxes as core of a subsequent moulding, a covering (4) is carried out which envelops the semi-boxes (1) and (2) like a case, making up the exterior volume of the piece and finishing it off.

The moulding of the covering using techniques of low pressure injection, not only makes it possible to use semi-boxes in the formation of the core, but also enables the walls to be of a reduced thickness. By doing this the weight and cost of the material used in the manufacture of the aforementioned semi-boxes are reduced considerably.

With the aim of improving the fixing of the covering (4) on the internal duct, lugs (5) are carried out on the exterior of each one of the semi-boxes (1) and (2) whose depth coincides with the thickness of the covering achieved during the second moulding process through low pressure injection.

## Claims

1. Process for the manufacture of hollow plastic bodies of complex geometry, wherein the manufacture of the part includes the following steps:
- making the part starting from two open half-shells (1, 2) made by traditional injection of plastic using a plastic material of little thickness
- preassembling the half-shells to form a closed core
- coating using a plastic material (4) generally with characteristics differing from those of the half-shells (1, 2) by means of an injection method,
which injection defines the outer contour of the part and its finish, the injection is carried out at a low pressure around 50 bar.

2. Process for the manufacture of hollow plastic bodies of complex geometry, in accordance with the first claim, characterized in that the interior pieces or semi-boxes (1), (2). obtained through traditional injection techniques, are pieces of thin walls, of the order of 2 mm. which are pre-assembled, preferably by tonguing and grooving.

3. Process for the manufacture of hollow plastic bodies of complex geometry, in accordance with the previous claims, characterized in that the surface lugs (5) of the interior pieces or semi-boxes are of a depth which coincides with the thickness of the second moulding, acting as cohesive elements between the two parts which constitute the tube.

4. Process for the manufacture of hollow plastic bodies of complex geometry, in accordance with previous claims, characterized in that the peripheral lugs (5) of the semi-boxes, through an appropriate gauging of its thicknesses, on executing the second moulding which produces the external covering, are able to fuse together constituting a chemical union between the covering and the interior semi-boxes.

## Patentansprüche

1. Verfahren zur Herstellung von hohlen Gegenständen aus Kunststoff mit komplizierter Geometrie, bei welchem die Einspritzung bei einem niedrigen Druck von ca. 50 bar erfolgt und für die Ausführung der Teile folgende Phasen vorgesehen sind:
- Herstellung des Teils aus zwei offenen Halbkokillen (1, 2), die in üblicher Weise aus einem Kunststoff geringer Stärke gespritzt werden;
- Vorverbindung der Halbkokillen zur Bildung eines geschlossenen Kerns;
- Verkleidung mit einem Kunststoff (4), der normalerweise andere Merkmale aufweist als der der Halbkokillen (1, 2) mit Hilfe einer Einspritztechnik, wobei diese Einspritzung die Aussenkontur des Teils bildet, sowie Fertigstellung desselben.

2. Verfahren zur Herstellung von hohlen Gegenständen aus Kunststoff mit komplizierter Geometrie, nach Anspruch eins dadurch gekennzeichnet, dass die mit üblichen Einspritzmethoden erhaltenen Innenteile oder Halbkokillen (1), (2) Teile mit dünnen Wänden von ca. 2 mm sind, die vorweg verbunden werden, vorzugsweise durch Einrasten oder Ineinanderfügen.

3. Verfahren zur Herstellung von hohlen Gegenständen aus Kunststoff mit komplizierter Geometrie, nach den vorangehenden Ansprüchen dadurch gekennzeichnet, dass die Ansätze (5) an der Oberfläche der Innenteile oder Halbkokillen eine Tiefe aufweisen, die mit der Stärke der zweiten formgebung übereinstimmt, und dass diese als Verbindungselemente zwischen den die Leitung bildenden beiden Teilen wirkt.

4. Verfahren zur Herstellung von hohlen Gegenständen aus Kunststoff mit komplizierter Geometrie, nach den vorangehenden Ansprüchen dadurch gekennzeichnet, dass die Umfangsansätze (5) der Halbkokillen bei entsprechender Kalibrierung ihrer Stärke während der zweiten Formgebung zur Herstellung der Verkleidung verschmelzen und eine chemische Verbindung zwischen der Verkleidung und den inneren Halbkokillen bewirken können.

## Revendications

1. Procédé pour la production de produits creux en plastique à géométrie complexe, où l'injection est réalisée à basse pression autour de 50 bars, la réalisation des produits prévoit les phases suivantes :
- Réalisation du produit à partir de deux demi-coquilles ouvertes (1, 2) réalisées à partir d'injection traditionnelle de plastique d'une matière plastique à petite épaisseur.
- Préassemblage des demi-coquilles pour la formation d'un noyau fermé.
- Revêtement d'une matière plastique (4) dont les caractéristiques sont généralement différentes que celles des demi-coquilles (1, 2) par une technique d'injection, cette injection définissant le contour extérieur du produit et sa finition.

2. Procédé pour la fabrication de produits creux en plastique à géométrie complexe, selon première revendication, caractérisé car les pièces intérieures ou demi-coquilles (1) (2) obtenues par des techniques d'injection classique sont des pièces aux parois minces, de l'ordre de 2 mm qui se préassemblent, de préférence par emboîtement ou encastrement.

3. Procédé pour la fabrication de produits creux en plastique à géométrie complexe, selon revendications précédentes, caractérisé car les tétons superficiels (5) des pièces intérieures ou demi-coquilles ont une profondeur correspondant à l'épaisseur du deuxième moulage et agissent comme éléments de connexion entre les deux parties constituant le conduit.

4. Procédé pour la fabrication de produits creux en plastique à géométrie complexe selon revendications précédentes, caractérisé car les tétons périphériques (5) des demi-coquilles, par un calibrage adéquat de leurs épaisseurs, lorsque s'effectue le deuxième moulage que produit le revêtement extérieur, peuvent se fondre en constituant une union chimique entre le revêtement et les demi-coquilles intérieures.
